**Europäisches Patentamt**

**European Patent Office**

**Office européen des brevets**

(19)

(11) Veröffentlichungsnummer: **0 237 518**
**B1**

# EUROPÄISCHE PATENTSCHRIFT

(12)

(45) Veröffentlichungstag der Patentschrift:
27.12.89

(51) Int. Cl.⁴: **F 16 D 1/02**

(21) Anmeldenummer: **87890034.9**

(22) Anmeldetag: **20.02.87**

(54) Anordnung zum Verlängern von Antriebswellen.

(30) Priorität: **22.02.86 DE 8604828 U**

(43) Veröffentlichungstag der Anmeldung:
**16.09.87 Patentblatt 87/38**

(45) Bekanntmachung des Hinweises auf die Patenterteilung:
**27.12.89 Patentblatt 89/52**

(84) Benannte Vertragsstaaten:
**AT CH DE FR GB IT LI NL SE**

(56) Entgegenhaltungen:
**DE-A-2 439 333**
**DE-B-1 015 272**
**GB-A-799 848**
**GB-A-2 116 279**
**US-A-3 462 114**

**Köhler, Rögnitz "Maschinenteile", Band 1,**
**5.Auflage, 1976, B.G. Teubner Stuttgart**

(73) Patentinhaber: **Schlögl, Leopold, Wehrgasse 6,**
**A-2563 Pottenstein (AT)**

(72) Erfinder: **Schlögl, Leopold, Wehrgasse 6, A-2563**
**Pottenstein (AT)**

(74) Vertreter: **Itze, Peter, Dipl.- Ing., Patentanwälte**
**Dipl.- Ing. Leopold Friebel Dipl.- Ing. Peter Itze**
**Amerlingstrasse 8, A-1060 Wien (AT)**

EP 0 237 518 B1

## Beschreibung

Die Erfindung bezieht sich auf eine Anordnung zum Verlängern von Antriebswellen, insbesondere von solchen zur Übertragung einer Drehbewegung an Drehgeber zur Umwandlung von Bewegungen in Impulsfolgen, wobei ein Wellenstück über einen mit demselben einstückigen Gewindefortsatz in ein anderes, das Gegenstück bildende Wellenstück einschraubbar ist.

Solche Drehgeber sind heutzutage bereits sehr weit verbreitet, wobei sie an verschiedenartigen Maschinen Anwendung finden. Dabei ist allerdings zu berücksichtigen, daß jede Maschine, an welcher ein derartiger Drehgeber anzubringen ist, einen anderen Aufbau aufweist, so daß die Drehgeber für die jeweilige Maschine speziell entwickelt werden müssen. Um einen Drehgeber universell anwendbar zu machen, muß er daher entsprechende Adaptierungsmöglichkeiten aufweisen, welche eine Anpassung an die jeweiligen Gegebenheiten ermöglichen. Insbesondere ist dabei wesentlich, daß die vom Drehgeber weggehende Welle eine entsprechende Länge, bzw. auch einen entsprechenden Durchmesser aufweist.

Es ist bei anderen Maschinen, z. B. bei Textilmaschinen, bekannt (siehe DE-A-2 439 333), Wellen dadurch zu verlängern, daß ein Wellenstück an seinem einen Ende ein mit einem Innengewinde versehenes Sackloch aufweist, in welches ein mit Außengewinde versehener Zapfen, der an dem anderen Wellenstück vorgesehen ist, einschraubbar ist. Bei entsprechend festem Anziehen der Gewindestücke wird damit eine axiale Verlängerung der Welle erzielt.

Aus der GB-A-799 848 geht hervor, zwei Wellenstücke über einen gemeinsamen in beide Wellenstücke einschraubbaren Zapfen zu verbinden, wobei der Zapfen in seinem Mittelbereich eine zylindrische Paßfläche aufweist, welche an beiden Seiten von Gewinden begrenzt ist, wobei die Gewinde in entsprechende Gegengewinde, die an Innenpaßflächen der Wellenstücke anschließen, einschraubbar sind. Die Ausrichtung der beiden Wellenstücke erfolgt dabei über die zylindrische Außenpaßfläche des einschraubbaren Paßstückes im Zusammenwirken mit den Innenpaßflächen des Wellenstückes.

Insbesondere bei den vorstehend geschilderten Drehgebern ist es erforderlich, daß die vom Drehgeber wegführende Welle nahezu absolut rund läuft. Dies deshalb, weil es sonst, z. B. bei einer Reibradkupplung, zu unterschiedlichen Reibungswerten führt, was zu Ungenauigkeiten bei der Übertragung der Drehbewegung führen kann.

Der Erfindung liegt die Aufgabe zugrunde, eine Anordnung der eingangs genannten Art zu schaffen, mittels welcher es ermöglicht ist, eine axiale Verlängerung der Welle zu erzielen, und zwar derart, daß der an die Welle des Drehgebers angesetzte Wellenteil koaxial mit der Welle des Drehgebers verläuft und solcherart trotz der fertigungsbedingten Passungstoleranzen rund läuft.

Erfindungsgemäß wird diese Aufgabe dadurch gelöst, daß im Verbindungsbereich der Wellenstücke in Axialrichtung voneinander getrennte Paßflächen unterschiedlicher Durchmesser vorgesehen sind, wobei zwischen den Paßflächen wenigstens ein Gewindeteil vorgesehen ist, dessen Kerndurchmesser gleich oder größer ist als der Außendurchmesser der inneren Paßflächen und dessen Außendurchmesser gleich oder kleiner ist als der Durchmesser der äußeren Paßflächen. Dadurch wird erreicht, daß die zur gegenseitigen Abstützung der Wellenstücke dienenden Paßflächen möglichst weit voneinander entfernt sind, wobei die innere Paßfläche auf Grund ihres geringeren Durchmessers eine wesentlich geringere Schwächung des aufnehmenden Wellenstückes bewirkt. Außerdem erfolgt die Abstützung über zwei möglichst weit voneinander entfernte Flächenstücke, wodurch die bereits angeführte genaue Halterung und Zentrierung des eingeschraubten Wellenstückes erzielt wird.

Vorteilhafterweise können die Paßflächen Zylindermantelflächen sein, wobei an dem einzuschraubenden Wellenstück ein radial abstehender Paßflansch vorgesehen ist, der in eingeschraubtem Zustand an dem äußeren Ende des anderen Wellenstückes satt aufliegt. Dadurch wird einerseits eine genaue Festlegung des Wellenstückes in radialer Richtung durch die Zylindermantelflächen erreicht, wobei Zylindermantelflächen fertigungstechnisch einfach und mit sehr hoher Genauigkeit hergestellt werden können. Der radial abstehende Paßflansch dient zusätzlich der genauen Einhaltung der vorgegebenen Wellenlänge, wobei überdies auf Grund der Reibung des Paßflansches an dem äußeren Ende des anderen, also des aufnehmenden, Wellenstückes der Übertragung des Drehmoments bzw. der Drehbewegung dient. Zusätzlich können dabei die beiden Wellenstücke in zusammengeschraubtem Zustand durch eine Verdrehsicherung gegen unbeabsichtigtes Auseinanderschrauben gesichert sein, wobei die Verdrehsicherung vorzugsweise durch eine zwischen die vordere Endfläche des eingeschraubten Wellenstückes und dem Boden des den eingeschraubten Teil des einen Wellenstückes aufnehmenden Sackloches des andern Wellenstückes eingelegte Federzahnscheibe gebildet ist. Diese Federzahnscheibe dient dabei in herkömmlicher Weise zur Ausübung eines Druckes auf die Flanken der Gewindegänge, wobei zudem auch noch durch die Riefungen erreicht werden kann, daß es zu einem Verhaken der Riefungen, mit den aus der Ebene der Federzahnscheibe herausgebogenen Elemente kommt, was zusätzlich eine weitere Verdrehsicherung bewirkt.

In der Zeichnung ist ein Ausführungsbeispiel des Erfindungsgegenstandes wiedergegeben, u.zw. bei der Anwendung an einem Drehgeber zur Umwandlung von Bewegungen in Impulsfolgen.

Fig. 1 zeigt einen Axialschnitt durch eine mit der erfindungsgemäßen Wellenanordnung versehenen Drehgeber, wobei im oberen und im unteren Teil dieser Figur unterschiedliche Varianten wiedergegeben sind.

Fig. 2 zeigt im Detail den Verbindungsbereich zwischen den beiden Wellenstücken.

Fig. 3 gibt im größeren Detail die Verdrehsicherung zwischen den beiden Wellen wieder (Bereich X der Fig. 2).

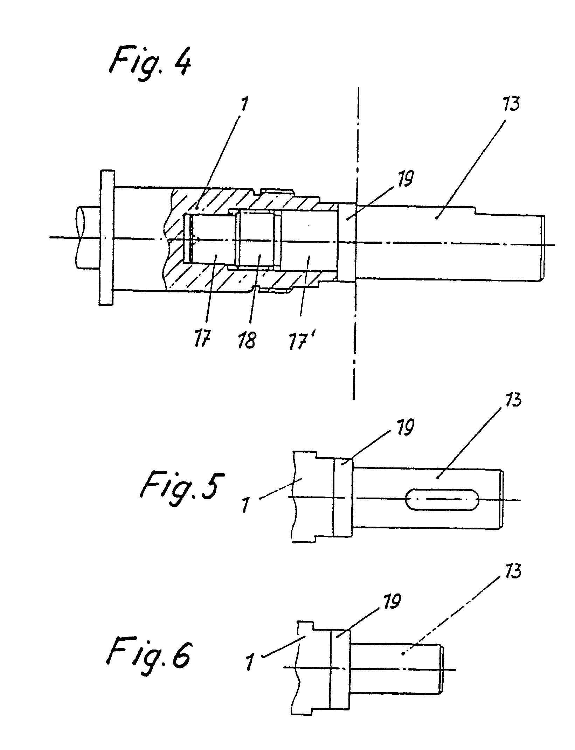

Die Fig. 4 bis 6 veranschaulichen die vielseitige Verwendbarkeit der erfindungsgemäßen Anordnung, u.zw. dadurch, daß in die Welle des Drehgebers unterschiedlich ausgebildete Wellenstücke eingeschraubt sind, welche zum Anschluß an die zu überwachende Vorrichtung dienen.

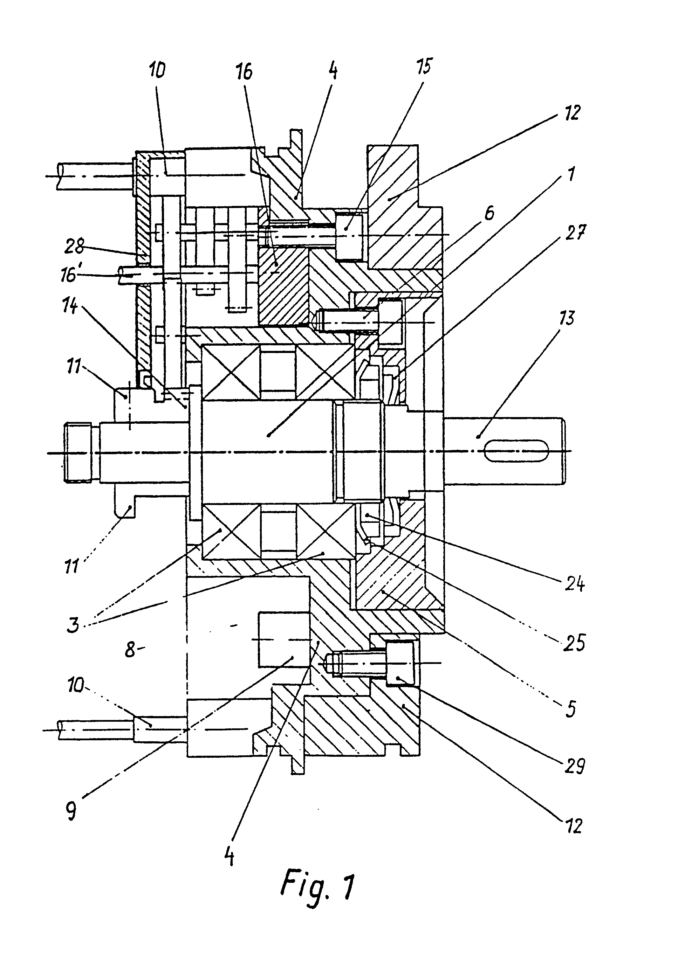

Wie aus Fig. 1 ersichtlich, ist mit 1 eine Welle bezeichnet, welche über Lagerungen 3 in einem Gehäuse 4 gehaltert ist. Die Lagerungen 3 der Welle 1 sind dabei über ein Lagerhalterungsscheibe 5 festgelegt, welche mittels Sicherungsschrauben 6 am Gehäuse 4 festgelet ist. An der der Lagerhalterung gegenüberliegenden Seite weist das Gehäuse 4 Ausnehmungen 8 auf, welche zur Aufnahme etwaiger Elektronikbauteile, eines Getriebes u. dgl. dient. Mit 9 ist ein Träger für solche Aufbauelemente bezeichnet. Weiters sind am Gehäuse 4 Halterungspfeiler 10 vorgesehen, welche gleichfalls für die Festlegung von elektronischen Bauteilen dienen.

Wie der Fig. 1 entnehmbar, sind die vorstehend beschriebenen Teile, nämlich die Welle 1, die Lagerungen 3, das Gehäuse 4, die Lagerhalterungsscheibe 5, die Sicherungsschraube 6, die Ausnehmung 8 des Gehäuses 4 und der Träger 9 sowie die Halterungspfeiler 10 bei beiden in Fig. 1 wiedergegebenen Ausführungsformen gleich ausgebildet. Die beiden in Fig. 1 wiedergegebenen Ausführungsbeispiele unterscheiden sich somit lediglich hinsichtlich Adaptierungselemente, mittels welcher der vorstehend beschriebene Grundbauteil des Drehgebers an die jeweiligen Gegebenheiten anpaßbar ist.

Für diese Anpaßbarkeit ist am Gehäuse 4 ein Adapterflansch 12 angebracht, welcher, wie aus Fig. 1 ersichtlich ist, bei den beiden Ausführungsvarianten unterschiedlich ausgebildet ist. Bei der in der unteren Hälfte der Fig. 1 gezeigten Ausführungsform ist der Adapterflansch 12 mittels einer Befestigungsschraube 29 gehalten.

Die Welle 1 ist mittels eines Wellenstückes 13 in Axialrichtung verlängerbar, u.zw. derart, daß in der Welle 1 an der den zu überwachenden Maschinenteil zugewandten Ende ein Sackloch 20 vorgesehen ist, welches zwei zylindrische Paßflächen 17, 17' aufweist, zwischen denen sich ein Gewindeteil 18 befindet. Der Kerndurchmesser des Gewindeteils 18 ist dabei gleich oder größer dem Durchmesser der inneren zylindrischen Paßfläche 17 und der Außendurchmesser des Gewindeteils 18 ist dabei gleich oder kleiner dem Durchmesser der äußeren Paßfläche 17'. Das in die Welle 1 einzuschraubende Ende des Wellenstückes 13 ist dabei analog als Gegenstück aufgebaut. Grundsätzlich ist dabei festzustellen, daß der Durchmesser der äußeren Paßfläche etwa zwei Drittel des Außendurchmessers des Endes der Welle 1 beträgt, wobei das Verhältnis von Länge zu Durchmesser der einzelnen Paßflächen bzw. des Gewindeteiles etwa 1 : 1 beträgt. An dem dem Ende der Welle abgewandten Ende der äußeren Paßfläche 17' weist die Welle 13 einen radial abstehenden Paßflansch 19 auf, der sich bei eingeschraubtem Wellenstück 13 am Ende der Welle 1 abstützt. Die Größe der aneinanderliegenden Fläche des radialen Paßflansches 19 an dem Ende der Welle 1 richtet sich dabei nach dem zu übertragenden Drehmoment, da es in der Regel ausreicht, wenn durch den Reibungsschluß zwischen Paßflansch 19 und dem Ende der Welle 1 das eingeschraubte Wellenstück 13 in der Welle 1 festgelegt ist. Die Paßfläche zwischen dem Paßflansch 19 und dem Ende der Welle 1 kann dabei genau in Radialebene liegen, kann aber auch konisch verlaufen, also den Mantel eines Kegelstumpfes bilden.

In Abwandlung der dargestellten Ausführungsvariante könnte auch eine der beiden Paßflächen 17 oder 17' konisch ausgebildet sein, wobei die andere Paßfläche dann nach wie vor zylindrisch verbleibt. Dadurch könnte der Paßflansch 19 und die zugehörigen Paßflächen eingespart werden. Das Gewinde des Gewindeteils 18 kann dabei je nach vorwiegend benützter Drehrichtung entweder rechts oder linksgängig sein, wobei es ein oder mehrgängig ausgebildet sein kann.

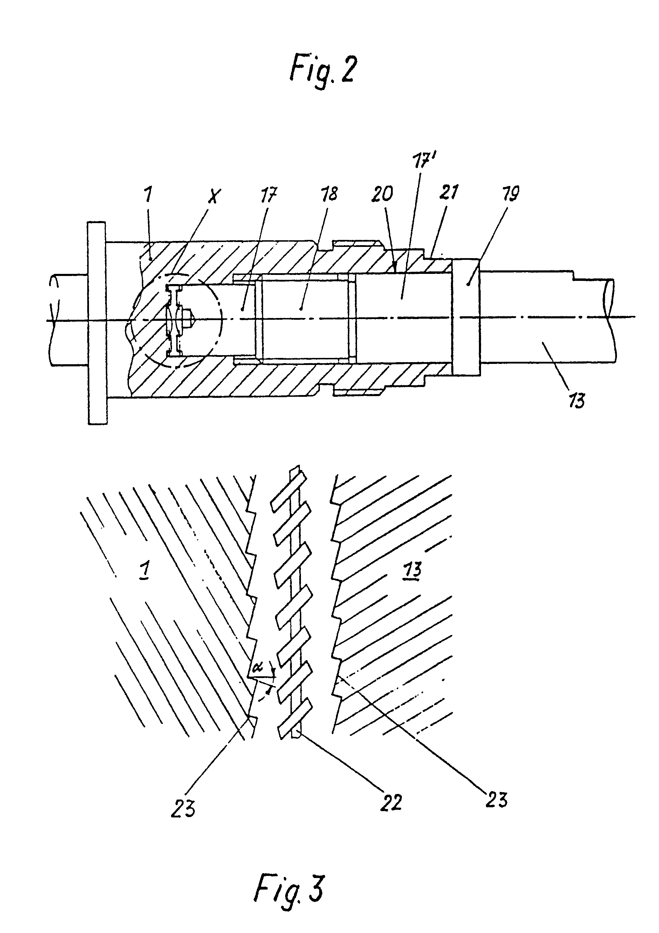

Um ein selbsttätiges Auseinanderschrauben der Wellen 1 und 13 sicher zu verhindern wird bei vorliegender Ausführungsform zwischen dem Boden des Sackloches 20 und dem eingeschraubten Ende der Welle 13 eine Zahnscheibe 22 eingelegt. Wie in Fig. 3 wiedergegeben, sind an den zur Anlage an die Zahnscheibe 22 bestimmten Flächen der Wellen 1 bzw. der Welle 13 Riefungen 23 vorgesehen, deren Teilung bei der dargestellten Ausführungsvariante der Teilung der Zähne der Zahnscheibe 22 entspricht. Dabei können die Flanken, welche sich an den Zähnen der Zahnscheibe 22 abstützen um einen Winkel geneigt verlaufen, um ein Auseinanderschrauben der beiden Wellen 1 und 13 zu ermöglichen ohne die Zahnscheibe zu zerstören. Die Teilung der Riefung 32 könnte natürlich auch unterschiedlich zu der Teilung der Zahnscheibe 22 sein, wodurch eine noch feiner Einrastbarkeit und Einstellbarkeit ermöglicht ist.

Anstelle der wiedergegebenen Sicherungsvariante mit Hilfe der Sicherungsscheibe 22 könnte in nicht dargestellter Weisei auch eine Druckschraube im Inneren der Welle 13 vorgesehen sein, welche sich am Boden der Bohrung 20 abstützt und so das Gewinde des Gewindeteiles 18 kontert. Es könnte natürlich auch ein quer verlaufender Sicherungsbolzen die beiden ineinandergeschraubten Wellen gegen ein Verdrehen sichern. Schließlich könnte das Gewinde des Gewindeteils 18 selbstsichernd ausgebildet sein, was ebenfalls ein unbeabsichtigtes Herausschrauben der Welle 13 aus der Welle 1 verhindert.

Um die Welle 1 beim Einschrauben bzw. Herausschrauben des Wellenstückes 13 gegen Verdrehen sichern zu können, sind an der Welle Schlüsselansatzflächen 21 vorgesehen.

Wie aus Fig. 1 ersichtlich, ist bei dem im oberen Teil der genannten Figur wiedergegebenen Ausführungsbeispiel in die Ausnehmung 8 ein Getriebe 16 eingesetzt, welches mittels einer Schraube 15 im Gehäuse 4 festgelegt ist. Es handelt sich dabei um ein herkömmliches Zahnradgetriebe, welches je nach Erfordernissen ausgebildet ist. Eine nähere Beschreibung des Getriebes dürfte sich somit erübrigen. Das Getriebe wird über eine drehfest mit der Welle 1 verbundene gezahnte Antriebshülse 14 angetrieben, welche gleichzeitig die Codescheibenauflage 11 bildet. Es handelt sich dabei bei der im oberen Teil der Fig. 1 wiedergegebenen Ausführungsvariante um eine solche, welche für sogenannte Multiturn-Anwendungen dient. Die im unteren Teil wiedergegebene Ausführungsvariante ist für eine sogenannte Singleturn-Anwendung vorgesehen. An der Abtriebswelle 16' des Getriebes sind weitere Codescheiben drehbar gelagert, um eine genauere Ermittlung des Drehwertes zu erlangen.

Die Lagerungen 3 der Welle 1 können im Gehäuse 4 ist durch eine Mutter 24 vorgespannt und spielfrei eingestellt, welche durch eine Sicherungsscheibe 25 gegen Verdrehen gesichert ist. 27 ist ein Abstreifring, welcher das Eindringen von Staub oder sonstigen Verunreinigungen in die Lagerungen 3 verhindern soll. Zum gleichen Zweck ist das Getriebe 16 mit einer Abdeckhaube 28 geschlossen.

Aus dem vorstehend geschilderten Aufbau des Erfindungsgegenstandes ist erkennbar, daß der Grundbauteil, nämlich die Welle 1, die Lagerung 3 das Gehäuse 4 samt der zugehörigen Sicherungen der Lagerungen 3 im Gehäuse unverändert bleiben kann, unabhängig davon, ob der Drehgeber als Singlturn- oder Multiturn-Drehgeber eingesetzt werden soll. Auch hinsichtlich des Aufbaues der zu überwachenden Einrichtung ist weitestgehend eine Adaptierung in einfacher Weise dadurch möglich, daß der auf das Gehäuse 4 aufgeschraubte Adaptirungsflansch 12 entsprechend variiert werden kann. Auch die Länge bzw. die Stärke und Ausbildung der Anschlußwelle ist durch Einsetzen eines entsprechenden Wellenstückes 13 den jeweiligen Gegebenheiten einfach anpaßbar.

## Patentansprüche

1. Anordnung zum Verlängern von Antriebswellen, insbesondere von solchen zur Übertragung einer Drehbewegung an Drehgeber zur Umwandlung von Bewegungen in Impulsfolgen, wobei ein Wellenstück (13) über einen mit demselben einstückigen Gewindefortsatz in ein anderes, das Gegenstück (1) bildende Wellenstück einschraubbar ist, *dadurch gekennzeichnet*, daß im Verbindungsbereich der Wellenstücke (1, 13) in Axialrichtung voneinander getrennte Paßflächen (17, 17') unterschiedlicher Durchmesser vorgesehen sind, wobei zwischen den Paßflächen wenigstens ein Gewindeteil (18) vorgesehen ist, dessen Kerndurchmesser gleich oder größer ist als der Durchmesser der inneren Paßflächen (17) und dessen Außendurchmesser gleich oder kleiner ist als der Durchmesser der äußeren Paßflächen (17').

2. Anordnung nach Anspruch 1, *dadurch gekennzeichnet*, daß die Paßflächen (17, 17') Zylindermantelflächen sind, wobei an dem einzuschraubenden Wellenstück (13) ein radial abstehender Paßflansch (19) vorgesehen ist, der in eingeschraubtem Zustand an dem äußeren Ende des anderen Wellenstückes (1) satt anliegt.

3. Anordnung nach Anspruch 1 oder 2, *dadurch gekennzeichnet*, daß die beiden Wellenstücke (1, 13) in zusammengeschraubtem Zustand durch eine Verdrehsicherung gegen unbeabsichtigtes Auseinanderschrauben gesichert sind, wobei die Verdrehsicherung, durch eine zwischen die vordere Endfläche des eingeschraubten Wellenstückes (13) und dem Boden des den eingeschraubten Teil des Wellenstückes (13) aufnehmenden Sackloches (20) des anderen Wellenstückes (1) eingelegte Federzahnscheibe (22) gebildet ist, und wobei die zur Anlage an die Federzahnscheibe bestimmten Flächen Riefungen (23) aufweisen.

## Claims

1. An apparatus for lengthening drive shafts, in particular shafts of the type for transmitting a rotary motion to rotation transducers for converting motion into pulse trains, wherein a shaft portion (13) can be screwed via a threaded extension integral with the latter into another shaft portion forming a counterpart (1), *characterised* in that mating surfaces (17, 17'), which are of different diameter and which are separated from one another, are provided in the connecting zone of the shaft portions (1, 13), wherein at least one threaded part (18) is provided interconnecting the mating surfaces, the inner diameter of which threaded part is the same as or greater than the diameter of the inner mating surface (17) and the outer diameter of which is the same as or less than the diameter of the outer mating surface (17').

2. An apparatus according to claim 1, *characterised* in that the mating surfaces (17, 17') are cylindrical circumferential surfaces, wherein a radially projecting mating flange (19) is provided on the shaft portion (13) to be screwed in, which flange, in the screwed-in condition, abuts closely against the outer end of the other shaft portion (1).

3. An apparatus according to claim 1 or 2, *characterised* in that, in the screwed-together condition, the two shaft portions (1, 13) are prevented from being unintentionally unscrewed by a means which precludes relative rotation, wherein the means for precluding relative rotation comprises a toothed spring washer (22) inserted between the front end face of the screwed-in shaft portion (13) and the bottom of the blind hole (20) of the other shaft portion (1) accommodating the screwed-in part of the shaft portion (13), and wherein the surfaces intended for abutment against the toothed spring washer have serrations (23).

**Revendications**

1. Dispositif pour prolonger des arbres d'entraînement, en particulier des arbres devant transmettre un mouvement de rotation à des encodeurs pour transformer des mouvements en trains d'impulsions, un tronçon d'arbre (13) pouvant être vissé au moyen d'un prolongement fileté formant une seule pièce avec lui dans un autre tronçon d'arbre constituant le tronçon complémentaire (1), *caractérisé* en ce qu'on prévoit dans la zone de liaison des tronçons d'arbre (1, 13) des surfaces de contact (17, 17') de diamètres différents séparées mutuellement en direction axiale, en prévoyant entre les surfaces de contact au moins une partie filetée (18) dont le diamètre du noyau est égal ou supérieur au diamètre des surfaces de contact intérieures (17) et dont le diamètre extérieur est égal ou inférieur au diamètre des surfaces de contact extérieures (17').

2. Dispositif selon la revendication 1, *caractérisé* en ce que les surfaces de contact (17, 17') sont des surfaces latérales cylindriques, avec la présence sur le tronçon d'arbre (13) à visser d'une bride de contact (19) en partant radialement qui, à l'état vissé, est en contact à plat avec l'extrémité extérieure de l'autre tronçon d'arbre (1).

3. Dispositif selon la revendication 1 ou 2, *caractérisé* en ce que les deux tronçons d'arbre (1, 13) sont, à l'état assemblé par vissage, empêchés de se dévisser l'un de l'autre sans qu'on le veuille par un dispositif de blocage en rotation, le dispositif de blocage en rotation étant formé par un disque à dents flexibles (22) inséré entre la surface terminale antérieure du tronçon d'arbre (13) vissé et le fond du trou borgne (20) de l'autre tronçon d'arbre (1) recevant la partie vissée du tronçon d'arbre (13), et les surfaces dostinées à contacter le disque à dents flexibles comportant des stries (23).

*Fig. 1*

**Fig. 2**

**Fig. 3**

3

*Fig. 4*

*Fig.5*

*Fig.6*